# EUROPÄISCHE PATENTSCHRIFT

(11) **EP 2 478 251 B1**
(45) Veröffentlichungstag und Bekanntmachung des Hinweises auf die Patenterteilung: **06.07.2016**
(21) Anmeldenummer: 10754729.1
(22) Anmeldetag: 14.09.2010
(51) Int. Cl.: F16D 66/00

(54) **MESSANORDNUNG ZUR ZUSPANNKRAFTMESSUNG EINER SCHEIBENBREMSE UND EINE ENTSPRECHENDE SCHEIBENBREMSE**
MEASURING ARRANGEMENT FOR MEASURING THE CLAMPING FORCE OF A DISC BRAKE AND A CORRESPONDING DISC BRAKE
AGENCEMENT DE MESURE POUR LA MESURE DE LA FORCE D'APPLICATION D'UN FREIN À DISQUES ET UN FREIN À DISQUES CORRESPONDANT

(30) Priorität: 17.09.2009 DE 102009041951
(43) Veröffentlichungstag der Anmeldung: 25.07.2012
(73) Patentinhaber: KNORR-BREMSE Systeme für Nutzfahrzeuge GmbH, 80809 München (DE)
(72) Erfinder: BAUMGARTNER, Johann, 85368 Moosburg (DE); GEISSLER, Steffen, 63110 Rodgau (DE); GRUBER, Robert, 83539 Pfaffing (DE)
(74) Vertreter: Mattusch, Gundula
(86) Internationale Anmeldenummer: PCT/EP2010/063485
(87) Internationale Veröffentlichungsnummer: WO 2011/032946

(56) Entgegenhaltungen:
- EP-A1- 0 834 671
- EP-A2- 2 211 071
- DE-A1-102009 004 424
- US-A1- 2003 111 305

## Beschreibung

Die Erfindung betrifft eine Messanordnung zur Zuspannkraftmessung einer Scheibenbremse. Sie bezieht sich auch auf eine entsprechende Scheibenbremse.

Scheibenbremsen können zur Erfassung einer Zuspannkraft unterschiedliche Messanordnungen aufweisen, wobei hierzu zum Beispiel Drucksensoren bei einer hydraulischen Bremse Verwendung finden. Eine Scheibenbremse ist jedoch an einem Fahrzeug relativ extremen Betriebsbedingungen ausgesetzt, welche eine Messgröße, die zu der Zuspannkraft der Scheibenbremse korreliert, auf unterschiedliche Weise beeinflussen können.

DE 10 2009 004 424 A1 beschreibt eine Scheibenbremse mit einem eine Bremsscheibe übergreifenden Bremssattel, der einen Sattelkopf und damit durch Zugstreben verbundenen Sattelrücken aufweist und in dem beidseitig an die Bremsscheibe anpressbare, mittels eines sich in Achsrichtung der Bremsscheibe erstreckenden Haltebügels radial gesicherte Bremsbeläge gelagert sind, und mit einer an eine Auswerteeinheit angeschlossenen Messeinrichtung zur Ermittlung der Zuspannkraft. Die Messeinrichtung weist zwei in Zuspannrichtung relativ zueinander bewegbare Basiselemente auf, von denen eines als Sensor und das andere als ein damit in Wirkverbindung stehendes Korrespondenzteil ausgebildet ist, wobei ein Basiselement an dem einseitig am Sattelkopf oder am Sattelrücken eingespannten Haltebügel und das andere Basiselement an der der Einspannseite des Haltebügels gegenüberliegenden Seite am Bremssattel angeordnet ist.

EP 2 211 071 A2 gibt ein Verfahren zum Steuern einer druckluftbetätigten Scheibenbremse mit Selbstverstärkung und einem Steuergerät zur Regelung eines Bremsdrucks und eine Scheibenbremse an. Die Scheibenbremse weist zumindest eine Messeinrichtung zur Erfassung einer Aufweitung des Bremssattels durch eine Spannkraft zur Ermittlung eines aktuellen Reibwertes der Scheibenbremse durch das Steuergerät auf. Die Messeinrichtung ist zur Erfassung einer durch die Spannkraft bewirkten Verschiebung eines Belaghaltebügels aufgrund der Aufweitung des Bremssattels ausgebildet und weist zumindest einen Sensor mit einem Hall-Sensor und/oder einer Wirbelstrommessanordnung auf, welcher mit dem Belaghaltebügel zusammenwirkt.

Die Aufgabe der vorliegenden Erfindung ist es daher, eine verbesserte Messanordnung bereitzustellen. Eine weitere Aufgabe besteht darin, eine verbesserte entsprechende Scheibenbremse zu schaffen.

Die Aufgabe wird durch eine Messanordnung mit den Merkmalen des Anspruchs 1 sowie durch eine Scheibenbremse mit den Merkmalen des Anspruchs 33 gelöst.

Ein vorteilhaftes Merkmal der Erfindung besteht darin, dass der Zuspannkraftsensor und das Messobjekt mit dem jeweiligen der zwei Bauteile wieder abnehmbar anbringbar sind. Dadurch ergeben sich eine einfache Montage und kurze Auswechselzeit bei Wartung und Service, wobei gleichzeitig eine Genauigkeit der ermittelten Messgröße beibehalten ist. Ein Einsatzbereich ist vergrößert und umfasst Scheibenbremsen jeglicher Bauart, auch mit Selbstverstärkung.

Demgemäß weist eine Messanordnung zur Zuspannkraftmessung einer Scheibenbremse vorzugsweise Folgendes auf: zwei Bauteile der Scheibenbremse, welche bei Aufbringung einer Zuspannkraft relativ zueinander längs eines Wegs beweglich, insbesondere verschiebbar sind, zumindest einen Zuspannkraftsensor mit einem Gehäuse; ein Messobjekt, welches das eine der zwei Bauteile ist oder mit dem einen der zwei Bauteile fest verbindbar ist und zumindest eine metallische Stirnfläche oder zumindest ein Zielobjekt mit zumindest einer metallischen Stirnfläche zur berührungslosen Zusammenwirkung mit dem Zuspannkraftsensor aufweist; und eine Auswerteeinheit, wobei der Zuspannkraftsensor als Wirbelstromsensor zur Erfassung einer Verschiebung längs des Wegs mit der Auswerteeinheit zur Umwandlung der erfassten Verschiebung in eine Messgröße als Maß für die Zuspannkraft ausgebildet ist, und wobei der Zuspannkraftsensor und das Messobjekt mit dem jeweiligen der zwei Bauteile wieder abnehmbar anbringbar sind.

Der Zuspannkraftsensor und das Messobjekt können mit dem jeweiligen der zwei Bauteile zentriert und/oder formschlüssig wieder abnehmbar anbringbar sein. Dadurch ergibt sich der Vorteil, dass eine Montagezeit verkürzt ist, wobei Ausrichtzeiten auf ein Minimum reduziert sind.

Der Zuspannkraftsensor ist mit dem anderen der zwei Bauteile fest verbindbar und in einem Abstand zu der Stirnfläche längs des Wegs angeordnet, wobei das eine der zwei Bauteile ein Sattelrücken eines Bremssattels der Scheibenbremse und das andere der zwei Bauteile ein Sattelkopf des Bremssattels der Scheibenbremse ist.

In dem Gehäuse des Zuspannkraftsensors sind eine Aufnehmereinrichtung mit einer Spule und eine Verstärkereinrichtung angeordnet. Diese Anordnung ist vorteilhaft, da so eine Verstärkung des erfassten Messgrößensignals auf kürzestem Wege ohne Störeinflüsse durch elektromagnetische Felder von außen erfolgen kann. Zur Erhöhung der Störfestigkeit zusätzlich hinsichtlich Feuchtigkeit und Staub kann das Gehäuse hermetisch verschlossen sein. In einer Ausführung ist das Gehäuse zum Beispiel aus einem Kunststoff, wie beispielsweise glasfaserverstärktes Polyamid, hergestellt.

Der Zuspannkraftsensor ist mit der Spule der Aufnehmereinrichtung in einer Aufnehmerlängsachse rechtwinklig zu der Stirnfläche ausgerichtet. Dies kann zum Beispiel in einfacher Weise durch eine Zentriereinrichtung ausgeführt sein, die einen Formschluss über Flächen, Kanten, Zentrierstifte, -bolzen o. dgl. bildet.

Der Zuspannkraftsensor weist einen Messbereich auf, welcher um auftretende Einbautoleranzen und thermisch bedingte Längenänderungen größer ist als die durch die Zuspannkraft bewirkte maximale relative Verschiebung der beiden Bauteile zueinander.

Dadurch wird eine Beeinflussung durch Störgrößen wie Längenänderungen und Einbautoleranzen weitgehend reduziert.

Eine Stirnfläche des Zuspannkraftsensors kann in einem Abstand zu der Stirnfläche zwischen 0 mm und 10 mm, vorzugsweise zwischen 0,5 mm und 6,5 mm angeordnet sein. Wirbelstromsensoren sind erhältlich, welche auch in kürzester Entfernung ein Signal hoher Genauigkeit liefern.

Für eine Anpassung an das Umfeld kann der Zuspannkraftsensor zur Ausgabe eines auf das Material des Messobjekts, des Zielobjekts, das Material der Umgebung des Messobjekts und/oder des Zielobjekts und/oder die Geometrie des Messobjekts und/oder des Zielobjekts kalibrierbaren Sensorsignals ausgebildet sein. Dabei werden auch Oberflächenbeschichtungen der Stirnflächen berücksichtigt. Auch das Material des Gehäuses des Zuspannkraftsensors kann in die Kalibrierung mit einfließen. Dazu weist die Auswerteeinrichtung zum Beispiel eine Speichereinrichtung auf, in welcher entsprechende Werte in Tabellenform abgelegt sind, aus denen eine Kalibrierung in einfacher Weise ermöglicht wird. Diese Speichereinrichtung kann auch Werte beinhalten, welche zur Ausgabe eines temperaturkompensierten Sensorsignals und/oder für einen Nullpunktabgleich eines auszugebenden Sensorsignals benutzbar sind.

Der Nullpunkt entspricht hierbei dem Zustand der unbetätigten Bremse, der als Referenz für jede Bremsung dient. Dieser Nullpunkt kann sich in geringem Maße beim Betrieb (durch Erschütterungen, Temperaturausdehnungen, usw.) und in größerem Umfang bei Wartung und Service (z.B. Belagwechsel) verschieben. Der Absolutwert des Nullpunkts ist aufgrund einer Linearisierung des Sensorsignals nicht von Bedeutung. So kann der Zuspannkraftsensor auch zur Ausgabe eines linearisierten Sensorsignals ausgebildet sein, indem die dazugehörigen Werte in der Auswerteeinheit abgelegt sind. Die Linearisierung des Sensorsignals kann in Bezug auf eine Positionsänderung des Messobjekts, Zielobjekts und/oder die Zuspannkraft ausgebildet sein.

In einer Ausführung können die Aufnehmereinrichtung, die Verstärkereinrichtung und die Auswerteeinheit in dem Gehäuse angeordnet sein, wodurch sich ein kompakter Aufbau ergibt.

In einer alternativen Ausführung kann die Aufnehmereinrichtung in dem Gehäuse angeordnet sein. So kann nur noch die Spule im Gehäuse vorhanden sein, welches sich dadurch erheblich verkleinert. Dabei können weitere Schalteinheiten der Aufnehmereinrichtung, die Verstärkereinrichtung und die Auswerteeinheit davon getrennt angeordnet sein. Diese können zum Beispiel in einer Verschleißsensoreinheit der Bremse oder in einem Steuergerät integriert sein. Dadurch kann sich eine vereinfachte Kabelführung mit Zusammenführung ergeben, welche einen Installationsaufwand reduziert.

In einer anderen Alternative können die Aufnehmereinrichtung und die Verstärkereinrichtung in dem Gehäuse angeordnet sein, wobei die Auswerteeinheit in einer Verschleißsensoreinheit der Scheibenbremse angeordnet sein kann. Dabei kann die Software der Auswerteeinheit ein Bestandteil der Software der Verschleißsensoreinheit sein, was Platz- und Bauteileinsparungen mit sich bringt.

So kann der Zuspannkraftsensor mit zumindest einer fest anschließbaren und/oder zumindest einer über Steckverbindereinrichtungen anschließbaren Verbindungsleitung und/oder Ausgangsleitung versehen sein. Die Kabelzusammenführung, welche sich dadurch mit der Verschleißsensoreinheit oder anderen Einheiten der Bremse ergibt, kann als gemeinsames Kabel zu einem EBS-Steuergerät weitergeführt werden.

Eine Kabelzusammenführung ist auch vom Sensorkabel und einem Verschleißsensorkabel möglich, was wiederum Installationsaufwand und -platz verringert. Das Sensorkabel kann natürlich auch direkt an ein Bremssteuergerät angeschlossen sein.

Das Gehäuse kann in einfacher Weise mittels zumindest einem Befestigungselement direkt und/oder über zumindest eine Lasche mit dem einen der Bauteile und/oder an einem Bodenblech der Scheibenbremse befestigt sein. Es kann zur schnellen Montage und Demontage verschraubt sein.

Das Messobjekt kann als ein mit dem einen der zwei Bauteile der Scheibenbremse fest verbindbarer Belaghaltebügel ausgebildet sein, welcher die zumindest eine Stirnfläche oder das zumindest eine Zielobjekt mit zumindest einer Stirnfläche aufweist. Das Zielobjekt kann direkt oder über ein Halteelement mit dem Belaghaltebügel verbindbar sein. Dabei kann das Zielobjekt, welches metallisch ist oder eine metallische Stirnfläche aufweist angeschraubt, angenietet, angeschweißt oder auf andere Art angefügt sein. Es kann auch einstückig mit dem Belaghaltebügel ausgebildet sein. Selbstverständlich kann der Belaghaltebügel mehr als eine Stirnfläche bzw. mehr als ein Zielobjekt besitzen.

Zur Erhöhung einer Messgenauigkeit kann der Belaghaltebügel mit einer Zentriereinrichtung an dem einen Bauteil befestigbar sein. Trotzdem ist der Belaghaltebügel mit einfachen Mitteln tauschbar und entfernbar. Eine solche Fixierung wird zumindest in Messrichtung des Sensors. Die Messrichtung ist die Richtung, in welcher eine Verschiebung von dem Sensor längs seiner Aufnehmerlängsachse erfasst wird.

Um eine Zwangsführung, d.h. ohne Querversatz, Durchbiegung etc. zu erreichen, kann der Belaghaltebügel mit einer Führungseinrichtung an dem anderen Bauteil zur Zwangsführung in Richtung des Wegs verschiebbar geführt sein. Damit ist der Belaghaltebügel an dem anderen Bauteil der Scheibenbremse nicht starr befestigt und zumindest in Messrichtung des Sensors frei beweglich, so dass das Zielobjekt beim Zuspannkraftaufbau von der Spule des Sensors entfernt wird. Diese Ausbildung kann so ausgeführt sein, dass der Belaghaltebügel in seiner Bewegungsfreiheit bzw. in seinen Freiheitsgraden, in Bezug auf die Bremsscheibe in radialer Richtung und/oder Umfangsrichtung durch z.B. entsprechend ausgeformte Flächen am Bremssattel und/oder Bodenblech der Scheibenbremse eingeschränkt wird. So kann die sattelrückseitige Befestigung des Belaghaltebügels Schwenkbewegungen des Zielobjekts auf ihm quer zur Aufnehmerlängsachse der Spule des Sensors unterbinden. Dadurch kann die Bewegungsfreiheit des Zielobjekts in, bezogen auf die Bremsscheibe, radialer Richtung und/oder Umfangsrichtung eingeschränkt werden.

Die Befestigung des Belaghaltebügels auf dem Sattelrücken kann z.B. eine Bolzenverbindung, eine Schraubverbindung, eine Kombination daraus oder mit zusätzlichem Formschluss sein.

Der Belaghaltebügel und das Zielobjekt können für eine vereinfachte Kalibrierung aus einem Material hergestellt sein, welches für die Kalibrierung feststehende Eigenschaften aufweist.

Zur zumindest teilweisen Kompensation von eventuellen Schwenkbewegungen des Zielobjekts bzw. des Belaghaltebügels kann die Stirnfläche ballig ausgebildet sein.

Ein Zuspannkraftsensor ist für eine oben beschriebene Messanordnung wie oben beschrieben ausgebildet.

Ein Belaghaltebügel kann für eine obige Messanordnung wie beschrieben eingesetzt werden.

Eine Scheibenbremse mit einem eine Bremsscheibe übergreifenden Bremssattel, welcher einen Sattelkopf und damit verbundenen Sattelrücken aufweist, wobei in dem Bremssattel beidseitig an die Bremsscheibe anpressbare, mittels eines Belaghaltebügels radial gesicherte Bremsbeläge gelagert sind, ist dadurch gekennzeichnet, dass sie die oben angegebene Messanordnung aufweist.

Die Erfindung wird nun anhand von Ausführungsbeispielen mit Bezug auf die beigefügten Zeichnungen näher erläutert. Hierbei zeigt:
- Fig. 1: eine schematische Blockdarstellung eines ersten Ausführungsbeispiels einer erfindungsgemäßen Messanordnung;
- Fig. 2: eine perspektivische Ansicht einer Variation der erfindungsgemäßen Messanordnung mit einer Scheibenbremse; und
- Fig. 3: eine vergrößerte perspektivische Ansicht eines zweiten Ausführungsbeispiels der erfindungsgemäßen Messanordnung.

Gleiche Bauelemente bzw. Funktionseinheiten mit gleicher Funktion sind mit gleichen Bezugszeichen in den Figuren gekennzeichnet.

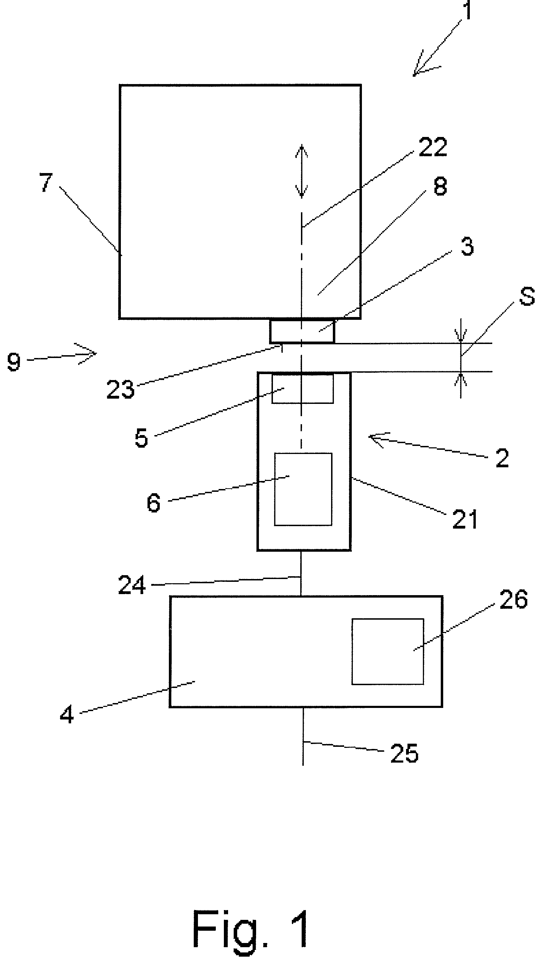

In Fig. 1 ist eine schematische Blockdarstellung eines ersten Ausführungsbeispiels einer erfindungsgemäßen Messanordnung 1 gezeigt.

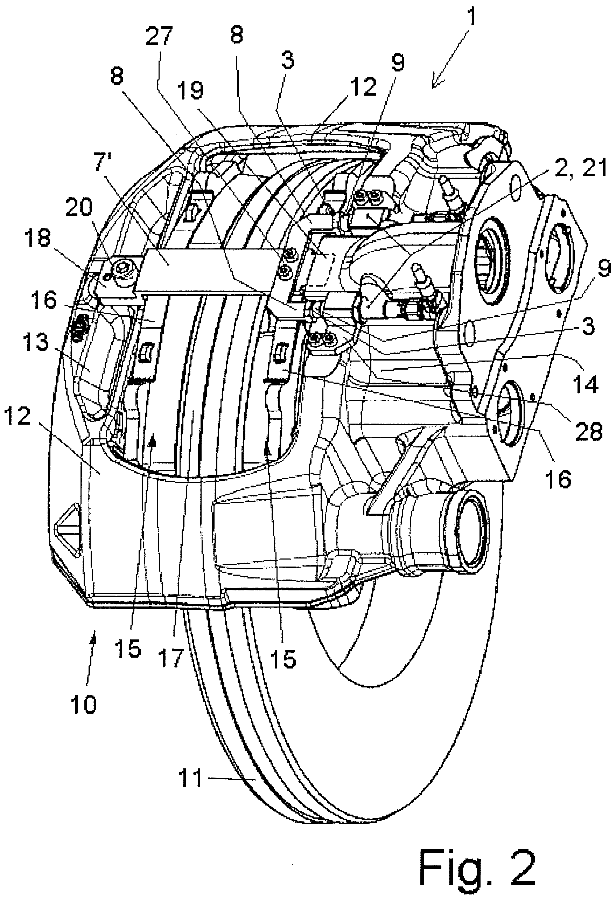

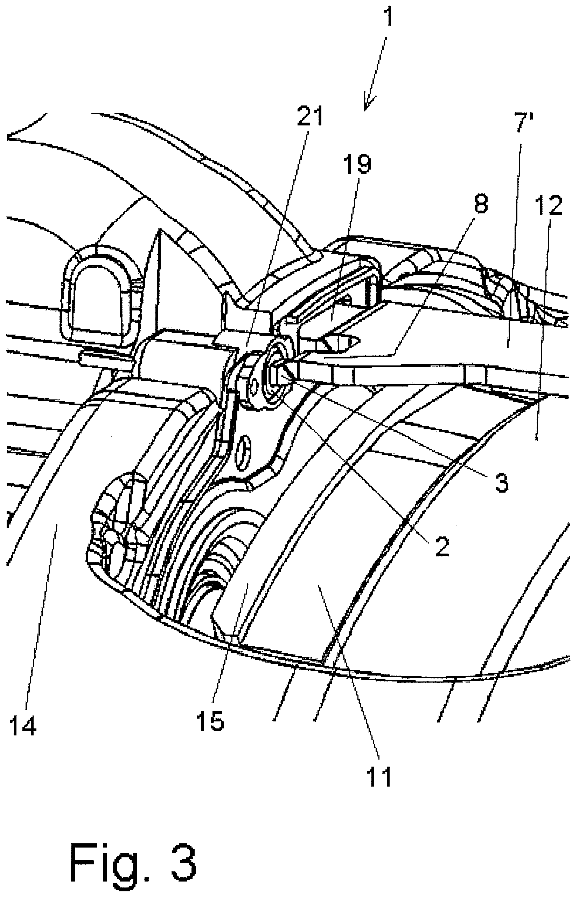

Die Messanordnung 1 umfasst einen Zuspannkraftsensor 2, eine Auswerteeinheit 4 und ein Messobjekt 7 mit einem Zielobjekt 3. Die zu erfassende Messgröße ist ein Weg S, welcher zwischen dem Messobjekt 7, hier zwischen dem Zielobjekt 3, und dem Zuspannkraftsensor 2 durch eine Bewegung (Doppelpfeil) des Messobjektes 7 veränderlich ist. Das Messobjekt 7 ist ein in Richtung des Doppelpfeils durch Krafteinwirkung bewegliches Bauteil bzw. ein Abschnitt eines solchen Bauteils. Dabei ist in diesem Beispiel das Messobjekt 7 ein Abschnitt eines Bremssattels 10 (siehe Fig. 2 und 3) oder ein mit einer Seite des Bremssattels 10 einer Bremse fest verbundenes Bauteil (z.B. ein Belaghaltebügel 7'), wobei der Zuspannkraftsensor 2 mit einer dieser Seite gegenüber liegenden Seite des Bremssattels 10 verbunden ist. Bei einem Bremsvorgang weitet sich der Bremssattel aufgrund einer aufgebrachten Zuspannkraft auf, wobei diese Aufweitung als Messgröße Weg S erfasst wird. Die Messgröße Weg S ist dabei ein Maß für die Zuspannkraft. Die Messung erfolgt vorzugsweise berührungslos.

Das Zielobjekt 3 ist in einem Zielobjektabschnitt 8 des Messobjektes 7 angeordnet. In diesem Beispiel handelt es sich um eine Metallplatte mit bestimmten bekannten Eigenschaften, wie beispielsweise Wärmeausdehnung. Die Bewegung des Messobjektes 7 wird auf das Zielobjekt 3 übertragen, so dass sich dieses in gleichem Maße wie das Messobjekt 7 längs einer Aufnehmerlängsachse 22 bewegt. Das Zielobjekt 3 besitzt eine Stirnfläche 23, welche rechtwinklig zur Aufnehmerlängsachse 22 angeordnet ist und dem Zuspannkraftsensor 2 gegenüber liegend angeordnet ist.

Die Aufnehmerlängsachse 22 ist gleichzeitig Längsachse des Zuspannkraftsensors 2. Der Zuspannkraftsensor 2 umfasst in diesem Beispiel ein Gehäuse 21, eine Aufnehmereinrichtung 5 und eine Verstärkereinrichtung 6. Die Aufnehmereinrichtung 5 und die Verstärkereinrichtung 6 sind in dem Gehäuse 21 platziert. Die Aufnehmereinrichtung 5 weist eine Längsachse auf, die gleichzeitig die Aufnehmerlängsachse 22 ist. Das Gehäuse 21 ist in dieser Ausführung hermetisch geschlossen.

Der Zuspannkraftsensor 2 ist in diesem Beispiel als Wirbelstromsensor ausgebildet. Dabei besitzt die Aufnehmereinrichtung 5 eine Spule, die ein elektromagnetisches Wechselfeld erzeugt, welches in das Zielobjekt eindringt und in dem Material des metallischen Zielobjektes Wirbelströme hervorruft. Die Intensität der Wirbelströme ist abhängig von dem Weg S derart, dass bei kürzeren Wegen S die Intensität größer ist als bei längeren Wegen. Das in der Spule erzeugte elektromagnetische Wechselfeld wird durch Beaufschlagung der Spule mit elektrischer Energie in bestimmter Höhe mit einer bestimmten Frequenz von der Aufnehmereinrichtung 5 erzeugt. In Abhängigkeit von der Intensität der im Zielobjekt 3 erzeugten Wirbelströme und der dabei verbrauchten Energie ermittelt die Aufnehmereinrichtung 5 eine elektrische Größe als Sensorsignal, welche dem Weg S proportional ist. Diese elektrische Größe, zum Beispiel Strom oder Spannung, wird dann von der Verstärkereinrichtung 6 verstärkt und über eine Verbindungsleitung 24 an die Auswerteeinheit 4 weitergeleitet. Die Auswerteeinheit 4 weist hier eine Speichereinrichtung 26 auf, in welcher zum Beispiel Tabellenwerte gespeichert sind, mit denen die Auswerteeinheit 4 die von dem Zuspannkraftsensor 2 gelieferte elektrische Größe bearbeiten kann. Dies können zum Beispiel eine Linearisierung, eine Kalibrierung, eine Temperaturkompensation, ein Nullpunktabgleich usw. sein. Hierzu kann die Auswerteeinheit 4 zumindest einen Temperatursensor aufweisen oder/und ein Temperatursignal, das zum Beispiel von dem Zuspannkraftsensor 2 oder einer anderen Quelle (z.B. Bremssteuergerät, Belagverschleißsensor), zur Auswertung heranziehen.

Der Zuspannkraftsensor 2 kann mit seiner Verbindungsleitung 24 an der Auswerteeinheit 4 entweder fest verbunden oder steckbar verbunden sein. Es ist auch möglich, dass die Auswerteeinheit 4 vollständig im Zuspannkraftsensor 2 angeordnet ist. Die Auswerteeinheit 4 kann aber auch in einer Verschleißsensorelektronik (nicht gezeigt) der Bremse (siehe Fig. 2 und 3) untergebracht oder in dieser, z.B. als Bestandteil einer Software, vollständig integriert sein. Eine andere Anordnung kann darin bestehen, dass der Zuspannkraftsensor 2 nur aus dem Gehäuse 21 und der Spule der Aufnehmereinrichtung 5 besteht, wobei sämtliche anderen Schaltkreise und Schalteinheiten in der Auswerteeinheit 4 (separat oder wie oben beschrieben anderweitig integriert) angeordnet sind. Das von der Auswerteeinheit 4 bereitgestellte und bearbeitete Sensorsignal wird als Messwert der Zuspannkraft über eine Ausgangsleitung 25 ausgegeben und an eine Weiterverarbeitung, z.B. ein EBS-System, weitergeleitet.

Die Verbindungsleitung 24 bzw. die Ausgangsleitung 25 können je nach oben beschriebener Anordnung
- direkt an ein Bremssystem angebunden sein,
- an ein Verschleißsensorsystem angeschlossen (fest oder über Steckverbindungen) und von dort in einem gemeinsamen Kabel, z.B. zu einem EBS, weitergeführt sein, und/oder
- mit einem Kabel eines Verschleißsensors zusammengeführt sein.

Die Stirnfläche 23 des Zielobjekts 3 und die zugeordnete Stirnfläche der Aufnehmereinrichtung 5 des Zuspannkraftsensors 2 sind zum Beispiel in einem Abstand zwischen 0 und 10 mm, vorzugsweise 0,5 und 6,5 mm angeordnet.

Der Messbereich des Zuspannkraftsensors 2 ist um die auftretenden Einbautoleranzen und thermisch bedingten Längenveränderungen größer ausgebildet als eine maximale Verschiebung, die durch die Zuspannkraft der Bremse bedingt ist, bewirkt.

Die Kalibrierungseigenschaften der Auswerteeinheit 4 sind so ausgelegt, dass der Zuspannkraftsensor 2 bzw. sein erzeugtes Sensorsignal auf das Material des Zielobjekts 3 kalibriert ist. Auch eine Kalibrierung des Zielobjekts 3 bei Beschichtung desselben, z.B. mit Farbe oder anderen Schichten, ist möglich ebenso wie eine Kalibrierung auf dessen Umgebung, z.B. die Geometrie des Messobjekts 7 bzw. des Zielobjektabschnitts 8.

Bei einem Nullpunktabgleich entspricht hier der Nullpunkt dem Zustand der unbetätigten Bremse, der als Referenz für jede Bremsung dient. Dieser Nullpunkt kann sich in geringem Maße während eines Betriebs (durch Erschütteningen, Temperaturausdehnungen, etc.) und in größerem Umfang beim Bremsenservice (z.B. Belagwechsel) verschieben. Der Absolutwert des Nullpunkts ist aufgrund der Linearisierung des Sensorsignals durch die Auswerteeinheit 4 nicht von Bedeutung.

Eine Linearisierung des Sensorsignals in Bezug auf die Positionsänderung des Zielobjekts 3 bzw. auf die Zuspannkraft der Bremse ist durch die Auswerteeinheit 4 möglich.

Das Gehäuse 21 des Zuspannkraftsensors 2 ist aus einem widerstandsfähigen Material hergestellt, zum Beispiel Kunststoff in glasfaserverstärkter Polyamidausführung. Anbringungsbeispiele an einer Bremse zeigen Fig. 2 und 3.

Fig. 2 illustriert eine perspektivische Ansicht einer Variation der erfindungsgemäßen Messanordnung 1 mit einer Scheibenbremse.

Die Scheibenbremse kann pneumatisch, hydraulisch oder elektrisch betreibbar sein. Sie weist einen Bremssattel 10 auf, der eine Bremsscheibe 11 übergreift. Auf beiden Seiten der Bremsscheibe 11 sind Bremsbeläge 15 angeordnet, die mittels einer Zuspanneinrichtung zum Bremsen gegen die Bremsscheibe 11 pressbar sind.

Der Bremssattel 10 besteht aus einem Sattelrücken 13 und einem Sattelkopf 14, welche durch zwei Zugstreben 12 miteinander verbunden sind. Die Zugstreben 12 verlaufen in Achsrichtung der Bremsscheibe 11 und begrenzen in Umfangsrichtung der Bremsscheibe 11 eine Montageöffnung 17 des Bremssattels 10.

Die Bremsbeläge 15 sind unter Vorspannung im Bremssattel 10 gehalten, wozu jeder Bremsbelag 15 eine Belaghaltefeder 16 aufweist, an welcher sich ein Belaghaltebügel 7' abstützt. Der Belaghaltebügel 7' ist an einem Ende mit einem Befestigungsabschnitt 18 mittels eines Befestigungselementes 20, z.B. eine Schraube, fest mit dem Sattelrücken 13 verbunden, wohingegen sein anderes Ende axial verschiebbar in einer Aufnahmetasche 19 des Sattelkopfes 14 gelagert ist. Dabei überspannt der Belaghaltebügel 7' die Montageöffnung 17 und erstreckt sich in seiner Länge in Achsrichtung der Bremsscheibe 5.

In seinem der Aufnahmetasche 19 zugewandten Endbereich weist der Belaghaltebügel 7' einen U-förmigen Messbügel 27 mit zwei sich in Achsrichtung der Bremsscheibe 11 erstreckenden Enden auf. In diesem zweiten Ausführungsbeispiel umfasst die Messanordnung 1 zwei parallel zueinander angeordnete Messstellen 9 mit jeweils einem Zuspannkraftsensor 2 und einem Zielobjekt 3. Die Zielobjekte 3 befinden sich hier an den Enden des Messbügels 27, welche Zielobjektabschnitte 8 bilden. Das Messobjekt 7 ist hier in Ausführung des Belaghaltebügels 7' fest mit dem Sattelrücken 13 verbunden.

Die Zuspannkraftsensoren 2 sind hier fest mit dem Sattelkopf 14 verbunden und mit ihren Aufnehmerlängsachsen 17 (Fig. 1) parallel zur Achse der Bremsscheibe 11 ausgerichtet. Die Aufweitung des Bremssattels 10 bei Aufbringung einer Zuspannkraft bewirkt eine Spreizung von Sattelrücken 13 und Sattelkopf 14, d.h. die Breite der Montageöffnung 17 vergrößert sich. Diese Spreizung bzw. Aufweitung des Bremssattels 10 erfassen die Zuspannkraftsensoren 2, indem sie die Aufweitung als Weg S (siehe Fig. 1) zwischen den Stirnflächen der Zuspannkraftsensoren 2 und den Zielobjekten 3 in oben angegebener Weise messen. Da hier zwei Zuspannkraftsensoren 2 in dieser Messanordnung 1 vorhanden sind, können deren Signale in der Auswerteeinheit 4 auch gemittelt werden, wodurch eine höhere Genauigkeit in der Messung der Zuspannkraft erzielbar ist.

Die Zuspannkraftsensoren 2 sind hier mit ihren Gehäusen 21 mittels einer Lasche 28 und zwei Schrauben auf dem Sattelkopf 14 angebracht. Eine solche Lasche 28 ist in Längsrichtung am Gehäuse 21 angebracht und verläuft parallel zur Achse der Bremsscheibe 11. Die Lasche 28 kann auch in einer anderen Ausführung in einer Art Hülse das Gehäuse 21 umfassen. Die Gehäuse 21 weisen zur Zentrierung und Ausrichtung mit den Zielobjekten 3 Flächen auf, welche mit Flächen des Sattelkopfes 14 zusammenwirken. Andere Befestigungs- und Zentriermöglichkeiten sind selbstverständlich möglich. Dadurch ergeben sich einfache Austauschmöglichkeiten bei Wartung und Service der Bremse.

In dieser Ausführung sind die Zielobjekte 3 einstückig mit dem Messbügel 27 ausgebildet, und der Messbügel 27 ist mit dem Belaghaltebügel 7' durch Verschraubung fest verbunden. Ein zweites Ausführungsbeispiel der erfindungsgemäßen Messanordnung 1 stellt Fig. 3 in einer vergrößerten perspektivischen Ansicht dar.

In diesem zweiten Ausführungsbeispiel ist das Messobjekt 7 auch als Belaghaltebügel 7' ausgebildet, wobei er hier neben seinem Endabschnitt, der in der Aufnahmetasche 19 des Sattelkopfes 14 gelagert ist, in den Zielobjektabschnitt 8 in Art eines abgespreizten Fingers verzweigt. Am freien Ende des Zielobjektabschnitts 8 ist das Zielobjekt 3 in Gestalt einer abstehenden Fläche einstückig mit dem Zielobjektabschnitt 8 und mit dem Belaghaltebügel 7' ausgebildet. Das Zielobjekt 3 kann in einer anderen Ausführung auch an das freie Ende des Zielobjektabschnitts 8 angeklebt, angeschraubt, angenietet, angeschweißt, oder in anderer Art und Weise angefügt sein.

Bei einer mehrteiligen Ausführung von Belaghaltebügel 7' und Zielobjekt 3 besteht ein Vorteil darin, dass das Material des Zielobjektes 3 besser auf Sensorparameter abstimmbar ist, da der Belaghaltebügel 7' nicht alle Funktionseigenschaften des Zielobjektes 3 aufweisen muss.

Der Belaghaltebügel 7' kann am Bremssattel 10 auch über eine zusätzlich zur Befestigung vorgesehene Zentriereinrichtung, z.B. Flächen und/oder Stifte/Bolzen, formschlüssig angebracht sein.

Die Aufnahmetasche 19 kann so ausgebildet sein, dass sie eine solche Führung des Belaghaltebügels 7' ermöglicht, dass dieser keine Bewegungen quer zur Aufnehmerlängsachse 22 bei Bremsungen ausführen kann.

In Fig. 2 ist das Gehäuse 21 des Zuspannkraftsensors 2 mit einer stirnseitigen Lasche versehen. Es kann hier zum Beispiel in eine am Sattelkopf 14 vorgesehene Aufnahme eingeschoben und dann durch die Lasche am Sattelkopf 14 fixiert werden. Eine Zentrierung ist dabei durch den Formschluss zwischen Aufnahme und Gehäuse 21 gegeben. Natürlich sind hierbei auch Flächen möglich, die eine Verdrehung des Gehäuses 21 in der Aufnahme verhindern.

Ein Abstand zwischen Stirnfläche 23 des Zielobjektes 3 und der Stirnfläche des Zuspannkraftsensors 2 ist sowohl in Fig. 2 als Fig. 3 wie oben unter Fig. 1 beschrieben zwischen 0 und 10 mm, vorzugsweise zwischen 0,5 und 6,5 mm vorgesehen. Selbstverständlich sind auch andere Abstandsmaße möglich, was zum Beispiel von Art und Empfindlichkeit des Zuspannkraftsensors 2 abhängig sein kann.

Die Erfindung ist nicht auf die oben beschriebenen Ausführungsbeispiele beschränkt, sondern sie ist im Rahmen der beigefügten Ansprüche modifizierbar.

Es ist zum Beispiel denkbar, dass das Zielobjekt 3 an seiner Stirnfläche 23 eine ballige Ausbildung aufweist, um eventuelle Schwenkbewegungen des Belaghaltebügels 7' bzw. des Messobjektes 7 zumindest teilweise zu kompensieren.

Der Belaghaltebügel 7' kann zum Beispiel als Stanz-/Biegeteil ausgebildet sein.

Das Zielobjekt 3 kann auch als zumindest eine Stirnfläche an dem Messobjekt 7 bzw. Belaghaltebügel 7' ausgeführt sein.

### Bezugszeichenliste

- 1: Messanordnung
- 2: Zuspannkraftsensor
- 3: Zielobjekt
- 4: Auswerteeinheit
- 5: Aufnehmereinrichtung
- 6: Verstärkereinrichtung
- 7: Messobjekt
- 7': Belaghaltebügel
- 8: Zielobjektabschnitt
- 9: Messstelle
- 10: Bremssattel
- 11: Bremsscheibe
- 12: Zugstrebe
- 13: Sattelrücken
- 14: Sattelkopf
- 15: Bremsbelag
- 16: Belaghaltefeder
- 17: Montageöffnung
- 18: Befestigungsabschnitt
- 19: Aufnahmetasche
- 20: Befestigungselement
- 21: Gehäuse
- 22: Aufnehmerlängsachse
- 23: Stirnfläche
- 24: Verbindungsleitung
- 25: Ausgangsleitung
- 26: Speichereinrichtung
- 27: Messbügel
- 28: Lasche
- S: Weg

## Patentansprüche

1. Messanordnung (1) zur Zuspannkraftmessung einer Scheibenbremse, mit:
a) zwei Bauteilen der Scheibenbremse, welche bei Aufbringung einer Zuspannkraft relativ zueinander längs eines Wegs (S) beweglich, insbesondere verschiebbar sind,
b) zumindest einem Zuspannkraftsensor (2) mit einem Gehäuse (21);
c) einem Messobjekt (7, 7'), welches das eine der zwei Bauteile ist oder mit dem einen der zwei Bauteile fest verbindbar ist und zumindest eine metallische Stirnfläche (23) oder zumindest ein Zielobjekt (3) mit zumindest einer metallischen Stirnfläche (23) zur berührungslosen Zusammenwirkung mit dem Zuspannkraftsensor (2) aufweist; und
d) einer Auswerteeinheit (4), wobei
e) der Zuspannkraftsensor (2) als Wirbelstromsensor zur Erfassung einer Verschiebung längs des Wegs (S) mit der Auswerteeinheit (4) zur Umwandlung der erfassten Verschiebung in eine Messgröße als Maß für die Zuspannkraft ausgebildet ist, und wobei
f) der Zuspannkraftsensor (2) und das Messobjekt (7, 7') mit dem jeweiligen der zwei Bauteile wieder abnehmbar anbringbar sind,
**dadurch gekennzeichnet, dass**
g) die zumindest eine metallische Stirnfläche (23) ballig ausgebildet ist.

2. Messanordnung (1) nach Anspruch 1, **dadurch gekennzeichnet, dass** der Zuspannkraftsensor (2) und das Messobjekt (7, 7') mit dem jeweiligen der zwei Bauteile zentriert und/oder formschlüssig wieder abnehmbar anbringbar sind.

3. Messanordnung (1) nach Anspruch 1 oder 2, **dadurch gekennzeichnet, dass** der Zuspannkraftsensor (2) mit dem anderen der zwei Bauteile fest verbindbar ist und in einem Abstand zu der Stirnfläche (23) längs des Wegs (S) angeordnet ist, wobei das eine der zwei Bauteile ein Sattelrücken (13) eines Bremssattels (10) der Scheibenbremse und das andere der zwei Bauteile ein Sattelkopf (14) des Bremssattels (10) der Scheibenbremse ist.

4. Messanordnung (1) nach einem der vorhergehenden Ansprüche, **dadurch gekennzeichnet, dass** der Zuspannkraftsensor (2) in dem Gehäuse (21) eine Aufnehmereinrichtung (5) mit einer Spule und eine Verstärkereinrichtung (6) aufweist.

5. Messanordnung (1) nach einem der vorhergehenden Ansprüche, **dadurch gekennzeichnet, dass** das Gehäuse (21) hermetisch verschlossen ist.

6. Messanordnung (1) nach Anspruch 4 oder 5, **dadurch gekennzeichnet, dass** der Zuspannkraftsensor (2) mit der Spule der Aufnehmereinrichtung (5) in einer Aufnehmerlängsachse (22) rechtwinklig zu der Stirnfläche (23) ausgerichtet ist.

7. Messanordnung (1) nach einem der vorhergehenden Ansprüche, **dadurch gekennzeichnet, dass** das Gehäuse (21) entfernbar an dem einen Bauteil der Scheibenbremse formschlüssig mit einer Zentriereinrichtung befestigbar ist.

8. Messanordnung (1) nach einem der vorhergehenden Ansprüche, **dadurch gekennzeichnet, dass** der Zuspannkraftsensor (2) einen Messbereich aufweist, welcher um auftretende Einbautoleranzen und thermisch bedingte Längenänderungen größer ist als die durch die Zuspannkraft bewirkte maximale relative Verschiebung der beiden Bauteile zueinander.

9. Messanordnung (1) nach einem der vorhergehenden Ansprüche, **dadurch gekennzeichnet, dass** eine Stirnfläche des Zuspannkraftsensors (2) in einem Abstand zu der Stirnfläche (23) angeordnet ist, wobei dieser Abstand einen Wert zwischen 0 mm und 10 mm, vorzugsweise zwischen 0,5 mm und 6,5 mm aufweist.

10. Messanordnung (1) nach einem der vorhergehenden Ansprüche, **dadurch gekennzeichnet, dass** der Zuspannkraftsensor (2) zur Ausgabe eines auf das Material des Messobjekts (7, 7'), des Zielobjekts (3), das Material der Umgebung des Messobjekts (7, 7') und/oder des Zielobjekts (3) und/oder die Geometrie des Messobjekts (7, 7') und/oder des Zielobjekts (3) kalibrierbaren Sensorsignals ausgebildet ist.

11. Messanordnung (1) nach einem der vorhergehenden Ansprüche, **dadurch gekennzeichnet, dass** der Zuspannkraftsensor (2) zur Ausgabe eines auf das Material des Gehäuses (21) kalibrierbaren Sensorsignals ausgebildet ist.

12. Messanordnung (1) nach einem der vorhergehenden Ansprüche, **dadurch gekennzeichnet, dass** der Zuspannkraftsensor (2) zur Ausgabe eines temperaturkompensierten Sensorsignals ausgebildet ist.

13. Messanordnung (1) nach einem der vorhergehenden Ansprüche, **dadurch gekennzeichnet, dass** der Zuspannkraftsensor (2) für einen Nullpunktabgleich eines auszugebenden Sensorsignals ausgebildet ist.

14. Messanordnung (1) nach einem der vorhergehenden Ansprüche, **dadurch gekennzeichnet, dass** der Zuspannkraftsensor (2) zur Ausgabe eines linearisierten Sensorsignals ausgebildet ist.

15. Messanordnung (1) nach Anspruch 14, **dadurch gekennzeichnet, dass** die Linearisierung des Sensorsignals in Bezug auf eine Positionsänderung des Messobjekts (7, 7'), Zielobjekts (3) und/oder die Zuspannkraft ausgebildet ist.

16. Messanordnung (1) nach einem der Ansprüche 4 bis 15, **dadurch gekennzeichnet, dass** die Aufnehmereinrichtung (5), die Verstärkereinrichtung (6) und die Auswerteeinheit (4) in dem Gehäuse (21) angeordnet sind.

17. Messanordnung (1) nach einem der Ansprüche 4 bis 15 **dadurch gekennzeichnet, dass** die Spule der Aufnehmereinrichtung (5) in dem Gehäuse (21) angeordnet ist, wobei weitere Schalteinheiten der Aufnehmereinrichtung (5), die Verstärkereinrichtung (6) und die Auswerteeinheit (4) davon getrennt angeordnet sind.

18. Messanordnung (1) nach Anspruch 17, **dadurch gekennzeichnet, dass** die weiteren Schalteinheiten der Aufnehmereinrichtung (5), die Verstärkereinrichtung (6) und die Auswerteeinheit (4) in einer Verschleißsensoreinheit der Scheibenbremse angeordnet sind.

19. Messanordnung (1) nach einem der Ansprüche 4 bis 15, **dadurch gekennzeichnet, dass** die Aufnehmereinrichtung (5) und die Verstärkereinrichtung (6) in dem Gehäuse (21) angeordnet sind, wobei die Auswerteeinheit (4) in einer Verschleißsensoreinheit der Scheibenbremse angeordnet ist.

20. Messanordnung (1) nach einem der vorhergehenden Ansprüche, **dadurch gekennzeichnet, dass** der Zuspannkraftsensor (2) mit zumindest einer fest anschließbaren und/oder zumindest einer über Steckverbindereinrichtungen anschließbaren Verbindungsleitung (24) und/oder Ausgangsleitung (25) versehen ist.

21. Messanordnung (1) nach Anspruch 20, **dadurch gekennzeichnet, dass** die zumindest eine fest anschließbare und/oder zumindest eine über Steckverbindereinrichtungen anschließbare Verbindungsleitung (24) und/oder Ausgangsleitung (25) zu einer Verschleißsensoreinheit und weiterführendem gemeinsamen Kabel zu einem EBS ausgeführt ist.

22. Messanordnung (1) nach Anspruch 19 oder 20, **dadurch gekennzeichnet, dass** die zumindest eine fest anschließbare und/oder zumindest eine über Steckverbindereinrichtungen anschließbare Verbindungsleitung (24) und/oder Ausgangsleitung (25) mit einem Kabel eines Verschleißsensors zu einem Kabel zusammengeführt ist.

23. Messanordnung (1) nach einem der vorhergehenden Ansprüche, **dadurch gekennzeichnet, dass** das Gehäuse (21) mittels zumindest einem Befestigungselement direkt und/oder über zumindest eine Lasche (28) mit dem einen der Bauteile und/oder an einem Bodenblech der Scheibenbremse befestigt ist.

24. Messanordnung (1) nach einem der vorhergehenden Ansprüche, **dadurch gekennzeichnet, dass** das Messobjekt (7) als ein mit dem einen der zwei Bauteile der Scheibenbremse fest verbindbarer Belaghaltebügel (7') ausgebildet ist.

25. Messanordnung (1) nach Anspruch 24, **dadurch gekennzeichnet, dass** der Belaghaltebügel (7') die zumindest eine Stirnfläche (23) oder das zumindest eine Zielobjekt (3) mit zumindest einer Stirnfläche (23) aufweist.

26. Messanordnung (1) nach Anspruch 25, **dadurch gekennzeichnet, dass** das zumindest eine Zielobjekt (3) mit zumindest einer Stirnfläche (23) an dem Belaghaltebügel (7') direkt oder über ein Halteelement befestigt ist.

27. Messanordnung (1) nach Anspruch 25 oder 26, **dadurch gekennzeichnet, dass** das zumindest eine Zielobjekt (3) mit zumindest einer Stirnfläche (23) an dem Belaghaltebügel (7') direkt oder über ein Halteelement wieder entfernbar befestigt ist.

28. Messanordnung (1) nach Anspruch 25, **dadurch gekennzeichnet, dass** das zumindest eine Zielobjekt (3) mit zumindest einer Stirnfläche (23) mit dem Belaghaltebügel (7') einstückig ausgebildet ist.

29. Messanordnung (1) nach einem der Ansprüche 24 bis 28, **dadurch gekennzeichnet, dass** der Belaghaltebügel (7') mit einer Zentriereinrichtung an dem einen Bauteil befestigbar ist.

30. Messanordnung (1) nach einem der Ansprüche 24 bis 29, **dadurch gekennzeichnet, dass** der Belaghaltebügel (7') mit einer Führungseinrichtung an dem anderen Bauteil zur Zwangsführung in Richtung des Wegs (S) verschiebbar geführt ist.

31. Zuspannkraftsensor (2) mit einem Gehäuse (21), wobei der Zuspannkraftsensor (2) zur berührungslosen Zusammenwirkung mit einem Messobjekt (7, 7') einer Messanordnung (1) als Wirbelstromsensor zur Erfassung einer Verschiebung längs eines Wegs (S) mit einer Auswerteeinheit (4) zur Umwandlung der erfassten Verschiebung in eine Messgröße als Maß für eine Zuspannkraft ausgebildet ist, **dadurch gekennzeichnet, dass** die Messanordnung (1) nach einem der vorhergehenden Ansprüche ausgebildet ist.

32. Belaghaltebügel (7') einer Scheibenbremse, die einen eine Bremsscheibe (11) übergreifenden Bremssattel (10) mit einem Sattelkopf (14) und damit verbundenen Sattelrücken (13) aufweist, wobei in dem Bremssattel (10) beidseitig an die Bremsscheibe (11) anpressbare, mittels des Belaghaltebügels (7') radial gesicherte Bremsbeläge (15) gelagert sind, wobei der Belaghaltebügel (7') zumindest eine metallische Stirnfläche (23) zur berührungslosen Zusammenwirkung mit einem Zuspannkraftsensor (2) einer Messanordnung (1) aufweist, **dadurch gekennzeichnet, dass** die zumindest eine metallische Stirnfläche (23) ballig ausgebildet ist und die Messanordnung (1) nach einem der Ansprüche 24 bis 30 ausgebildet ist.

33. Scheibenbremse mit einem eine Bremsscheibe (11) übergreifenden Bremssattel (10), welcher einen Sattelkopf (14) und damit verbundenen Sattelrücken (13) aufweist, wobei in dem Bremssattel (10) beidseitig an die Bremsscheibe (11) anpressbare, mittels eines Belaghaltebügels (7') radial gesicherte Bremsbeläge (15) gelagert sind, **dadurch gekennzeichnet, dass** die Scheibenbremse eine Messanordnung nach einem der Ansprüche 1 bis 30 aufweist.

## Claims

1. Measuring arrangement (1) for measuring the application force of a disc brake, comprising:
a) two components of the disc brake which can be moved, in particular displaced, relative to one another along a displacement distance (S) when an application force is applied;
b) at least one application force sensor (2) having a housing (21);
c) a measuring object (7, 7') which is one of the two components or can be fixedly connected to one of the two components, and has at least one metallic end face (23) or at least one target object (3) with at least one metallic end face (23) for contactless interaction with the application force sensor (2); and
d) an evaluation unit (4), wherein
e) the application force sensor (2) is configured as an eddy current sensor for sensing displacement along the displacement distance (S) with the evaluation unit (4) for converting the sensed displacement into a measurement variable as a measure of the application force, and wherein
f) the application force sensor (2) and the measuring object (7, 7') can be attached to the respective component of the two components in such a way that they can be removed again,
**characterised in that**
g) the at least one metallic end face (23) is formed spherically.

2. Measuring arrangement (1) according to claim 1, **characterised in that** the application force sensor (2) and the measuring object (7, 7') can be attached to the respective component of the two components in a centered manner and / or in a positively locking manner in such a way that they can be removed again.

3. Measuring arrangement (1) according to claim 1 or 2, **characterised in that** the application force sensor (2) can be fixedly connected to the other component of the two components and is arranged at a distance from the end face (23) along the displacement distance (S), wherein one of the two components is a calliper back (13) of a brake calliper (10) of the disc brake, and the other of the two components is a calliper head (14) of the brake calliper (10) of the disc brake.

4. Measuring arrangement (1) according to one of the preceding claims, **characterised in that** the application force sensor (2) has, in the housing (21), a pickup device (5) having a coil and a booster device (6).

5. Measuring arrangement (1) according to one of the preceding claims, **characterised in that** the housing (21) is hermetically sealed.

6. Measuring arrangement (1) according to claim 4 or 5, **characterised in that** the application force sensor (2) is oriented with the coil of the pickup device (5) on a pickup longitudinal axis (22) at a right angle to the end face (23).

7. Measuring arrangement (1) according to one of the preceding claims, **characterised in that** the housing (21) can be removably mounted on one of the components of the disc brake in such a way that it locks positively with a centring device.

8. Measuring arrangement (1) according to one of the preceding claims, **characterised in that** the application force sensor (2) has a measuring range which is larger, by an amount equal to installation tolerances which occur and thermally induced changes of length, than the maximum relative displacement of the two components with respect to one another which is brought about by the application force.

9. Measuring arrangement (1) according to one of the preceding claims, **characterised in that** an end face of the application force sensor (2) is arranged at a distance from the end face (23), wherein this distance has a value between 0 mm and 10 mm, preferably between 0.5 mm and 6.5 mm.

10. Measuring arrangement (1) according to one of the preceding claims, **characterised in that** the application force sensor (2) is designed to output a sensor signal which can be calibrated to the material of the measuring object (7, 7'), of the target object (3), the material of the surroundings of the measuring object (7, 7') and / or of the target object (3) and / or the geometry of the measuring object (7, 7') and / or of the target object (3).

11. Measuring arrangement (1) according to one of the preceding claims, **characterised in that** the application force sensor (2) is designed to output a sensor signal which can be calibrated to the material of the housing (21).

12. Measuring arrangement (1) according to one of the preceding claims, **characterised in that** the application force sensor (2) is designed to output a temperature-compensated sensor signal.

13. Measuring arrangement (1) according to one of the preceding claims, **characterised in that** the application force sensor (2) is designed for zero point alignment of a sensor signal which is to be output.

14. Measuring arrangement (1) according to one of the preceding claims, **characterised in that** the application force sensor (2) is designed to output a linearised sensor signal.

15. Measuring arrangement (1) according to claim 14, **characterised in that** the linearisation of the sensor signal is implemented with respect to a change in position of the measuring object (7, 7'), target object (3) and / or with respect to the application force.

16. Measuring arrangement (1) according to one of claims 4 to 15, **characterised in that** the pickup device (5), the booster device (6) and the evaluation unit (4) are arranged in the housing (21).

17. Measuring arrangement (1) according to one of claims 4 to 15, **characterised in that** the coil of the pickup device (5) is arranged in the housing (21), wherein further switching units of the pickup device (5), the booster device (6) and the evaluation unit (4) are arranged separately therefrom.

18. Measuring arrangement (1) according to claim 17, **characterised in that** the further switching units of the pickup device (5), the booster device (6) and the evaluation unit (4) are arranged in a wear sensor unit of the disc brake.

19. Measuring arrangement (1) according to one of claims 4 to 15, **characterised in that** the pickup device (5) and the booster device (6) are arranged in the housing (21), wherein the evaluation unit (4) is arranged in a wear sensor unit of the disc brake.

20. Measuring arrangement (1) according to one of the preceding claims, **characterised in that** the application force sensor (2) is provided with at least one connecting line (24) and / or output line (25) which can be fixedly attached and / or at least one connecting line (24) and / or output line (25) which can be attached via plug-type connector devices.

21. Measuring arrangement (1) according to claim 20, **characterised in that** the at least one connecting line (24) and / or output line (25) which can be fixedly attached and / or at least one connecting line (24) and / or output line (25) which can be attached via plug-type connector devices is designed to form a wear sensor unit and a common cable which leads on to an EBS.

22. Measuring arrangement (1) according to claim 19 or 20, **characterised in that** the at least one connecting line (24) and / or output line (25) which can be fixedly attached and / or at least one connecting line (24) and / or output line (25) which can be connected via plug-type connector devices is combined with a cable of a wear sensor to form one cable.

23. Measuring arrangement (1) according to one of the preceding claims, **characterised in that** the housing (21) is fastened directly and / or via at least one clip (28) to one of the components and / or to a bottom plate of the disc brake by means of at least one fastening element.

24. Measuring arrangement (1) according to one of the preceding claims, **characterised in that** the measuring object (7) is designed as a pad-mounting bracket (7') which can be fixedly connected to one of the two components of the disc brake.

25. Measuring arrangement (1) according to claim 24, **characterised in that** the pad-mounting bracket (7') has the at least one end face (23) or the at least one target object (3) with at least one end face (23).

26. Measuring arrangement (1) according to claim 25, **characterised in that** the at least one target object (3) is fastened with at least one end face (23) to the pad-mounting bracket (7') directly or via a holding element.

27. Measuring arrangement (1) according to claim 25 or 26, **characterised in that** the at least one target object (3) is fastened with at least one end face (23) to the pad-mounting bracket (7') directly or via a holding element in such a way that it can be removed again.

28. Measuring arrangement (1) according to claim 25, **characterised in that** the at least one target object (3) is formed with at least one end face (23) in one piece with the pad-mounting bracket (7').

29. Measuring arrangement (1) according to one of claims 24 to 28, **characterised in that** the pad-mounting bracket (7') can be fastened with a centring device to one of the components.

30. Measuring arrangement (1) according to one of claims 24 to 29, **characterised in that** the pad-mounting bracket (7') is guided in a displaceable manner with a guide device on the other component in the direction of the displacement distance (S) for the purpose of positive guidance.

31. Application force sensor (2) with a housing (21), wherein the application force sensor (2) is designed for contactless interaction with a measuring object (7, 7') of a measuring arrangement (1) as an eddy current sensor for sensing displacement along a displacement distance (S) with an evaluation unit (4) for converting the sensed displacement into a measurement variable as a measure of the application force, **characterised in that** the measuring arrangement (1) is designed according to one of the preceding claims.

32. Pad-mounting bracket (7') of a disc brake, having a brake calliper (10) which engages over a brake disc (11) and which has a calliper head (14) and calliper back (13) connected thereto, wherein brake pads (15) which can be pressed against the brake disc (11) on both sides and are secured radially by means of the pad-mounting bracket (7') are mounted in the brake calliper (10), wherein the pad-mounting bracket (7') has at least one metallic end face (23) for contactless interaction with an application force sensor (2) of a measuring arrangement (1), **characterised in that** the at least one metallic end face (23) is formed spherically and the measuring arrangement (1) is designed according to one of claims 24 to 30.

33. Disc brake, having a brake calliper (10) which engages over a brake disc (11) and which has a calliper head (14) and calliper back (13) connected thereto, wherein brake pads (15) which can be pressed against the brake disc (11) on both sides and are secured radially by means of a pad-mounting bracket (7') are mounted in the brake calliper (10), **characterised in that** the disc brake has a measuring arrangement according to one of claims 1 to 30.

## Revendications

1. Ensemble de mesure (1) pour la mesure de la force de serrage d'un frein à disque, comprenant :
a) deux composant du frein à disque, qui sont mobiles, en particulier déplaçable, l'un par rapport à l'autre le long d'une voie (S) quand une force de serrage est appliquée,
b) au moins un capteur de force de serrage (2) renfermant une boîte (21) ;
c) un objet à mesurer (7, 7') qui est un desdits deux composants ou qui est apte à être fixé au premier des deux composants, et qui présente au moins une face frontale métallique (23) ou au moins une cible (3) à au moins une face frontale métallique (23) pour l'interaction sans contact avec ledit capteur de force de serrage (2) ; et
d) une unité d'analyse (4), dans lequel
e) ledit capteur de force de serrage (2) est conçu sous forme d'un capteur à courant de Foucault pour la détection d"un déplacement le long de ladite voie (S), avec ladite unité d'analyse (4) pour la conversion du déplacement détecté en une grandeur de mesure comme mesure de la force de serrage, et dans lequel
f) ledit capteur de force de serrage (2) et ledit objet à mesurer (7, 7') sont aptes à être monté, de façon détachable, avec le composant respectif desdits deux composants,
**caractérisé en** ce
g) ladite au moins une face frontale métallique (23) a une configuration bombée.

2. Ensemble de mesure (1) selon la revendication 1, **caractérisé en ce que** ledit capteur de force de serrage (2) et ledit objet à mesurer (7, 7') sont aptes à être centré sur le composant respectif desdits deux composants et/ou monté, de manière détachable, en complémentarité de forme.

3. Ensemble de mesure (1) selon la revendication 1 ou 2, **caractérisé en ce que** ledit capteur de force de serrage (2) est apte à être fixé à l'autre desdits deux composants, en étant disposé à un écart de ladite face frontale (23) le long de la voie (S), audit premier desdits deux composants étant un dos de l'étrier (13) d'un étrier de frein (10) du frein à disque, pendant que l'autre desdits deux composants est une tête d'étrier (14) dudit étrier de frein (10) du frein à disque.

4. Ensemble de mesure (1) selon une quelconque des revendications précédentes, **caractérisé en ce que** ledit capteur de force de serrage (2) dans ladite boîte (21) comprend un moyen détecteur (5) à une bobine et un moyen amplificateur (6).

5. Ensemble de mesure (1) selon une quelconque des revendications précédentes, **caractérisé en ce que** ladite boîte (21) est hermétiquement fermée.

6. Ensemble de mesure (1) selon la revendication 4 ou 5, **caractérisé en ce que** ledit capteur de force de serrage (2) avec la bobine dudit moyen détecteur (5) est orienté à un angle droit par rapport à ladite face frontale (23) dans un axe longitudinale du capteur (22).

7. Ensemble de mesure (1) selon une quelconque des revendications précédentes, **caractérisé en ce que** ladite boîte (21) est apte à être monté, de façon détachable, audit premier composant, en complémentarité de forme, audit premier composant du frein à disque.

8. Ensemble de mesure (1) selon une quelconque des revendications précédentes, **caractérisé en ce que** ledit capteur de force de serrage (2) a une plage de mesure plus grande que le déplacement relative maximale desdits deux composants l'un par rapport à l'autre, par des tolérances de montage et des variations en longueur pour des raisons thermiques.

9. Ensemble de mesure (1) selon une quelconque des revendications précédentes, **caractérisé en ce qu'**une face frontale dudit capteur de force de serrage (2) est disposée à un écart de ladite face frontale (23), à cet écart ayant une valeur entre 9 mm et 10 mm, de préférence entre 0,5 mm et 6,5 mm.

10. Ensemble de mesure (1) selon une quelconque des revendications précédentes, **caractérisé en ce que** ledit capteur de force de serrage (2) est conçu pour la sortie d'un signal de capteur qu'on peut étalonner sur le matériau dudit objet à mesurer (7, 7'), de ladite cible (3), sur le matériau de l'environnement dudit objet à mesurer (7, 7') et/ou de ladite cible (3) et/ou sur la géométrie dudit objet à mesurer (7, 7') et/ou de ladite cible (3).

11. Ensemble de mesure (1) selon une quelconque des revendications précédentes, **caractérisé en ce que** ledit capteur de force de serrage (2) est conçu pour la sortie d'un signal de capteur qu'on peut étalonner sur le matériau de ladite boîte (21).

12. Ensemble de mesure (1) selon une quelconque des revendications précédentes, **caractérisé en ce que** ledit capteur de force de serrage (2) est conçu pour la sortie d'un signal de capteur qui est compensé en fonction de la température.

13. Ensemble de mesure (1) selon une quelconque des revendications précédentes, **caractérisé en ce que** ledit capteur de force de serrage (2) est conçu pour un tarage du point zéro d'un signal de capteur à délivrer.

14. Ensemble de mesure (1) selon une quelconque des revendications précédentes, **caractérisé en ce que** ledit capteur de force de serrage (2) est conçu pour la sortie d'un signal de capteur linéarisé.

15. Ensemble de mesure (1) selon la revendication 14, **caractérisé en ce que** la linéarisation du signal de capteur est formée relativement à une variation de la position dudit objet à mesurer (7, 7'), de ladite cible (3) et/ou la force de serrage.

16. Ensemble de mesure (1) selon une quelconque des revendications 4 à 15, **caractérisé en ce que** ledit moyen détecteur (5), ledit moyen amplificateur (6) et ladite unité d'analyse (4) sont disposés dans ladite boîte (21).

17. Ensemble de mesure (1) selon une quelconque des revendications 4 à 15, **caractérisé en ce que** la bobine dudit moyen récepteur (5) st disposée dans ladite boîte (21), et dans lequel des unités de commutation supplémentaires dudit moyen détecteur (5), ledit moyen amplificateur (6) et ladite unité d'analyse (4) sont en séparés.

18. Ensemble de mesure (1) selon la revendication 17, **caractérisé en ce que** lesdites unités de commutation supplémentaires dudit moyen détecteur (5), ledit moyen amplificateur (6) et ladite unité d'analyse (4) sont disposés dans une unité détectrice de l'usure du frein à disque.

19. Ensemble de mesure (1) selon une quelconque des revendications 4 à 15, **caractérisé en ce que** ledit moyen détecteur (5) et ledit moyen amplificateur (6) sont disposés dans ladite boîte (21), à l'unité d'analyse (4) étant disposée dans une unité détectrice de l'usure du frein à disque.

20. Ensemble de mesure (1) selon une quelconque des revendications précédentes, **caractérisé en ce que** ledit capteur de force de serrage (2) est muni d'au moins une ligne de connexion (24) et/ou d'au moins une ligne de sortie (25), qui peuvent être connectées de manière fixe et/ou via des moyens à connecteur à fiche.

21. Ensemble de mesure (1) selon la revendication 20, **caractérisé en ce que** ladite au moins une ligne de connexion (24) et/ou ladite au moins une ligne de sortie (25), qui peuvent être connectées de manière fixe et/ou via des moyens à connecteur à fiche, est/sont sortie(s) vers une unité détectrice de l'usure et un câble commun continué vers un système EBS.

22. Ensemble de mesure (1) selon la revendication 19 ou 20, **caractérisé en ce que** ladite au moins une ligne de connexion (24) et/ou ladite au moins une ligne de sortie (25), qui peuvent être connectées de manière fixe et/ou via des moyens à connecteur à fiche, et/ou ladite ligne de sortie (25) sont assemblés avec un câble d'un détecteur de l'usure dans un seul câble.

23. Ensemble de mesure (1) selon une quelconque des revendications précédentes, **caractérisé en ce que** ladite boîte (21) est fixée audit premier composant et/ou à une plaque de base du frein à disque moyennant au moins un élément de fixation directement et/ou via au moins une éclisse (28).

24. Ensemble de mesure (1) selon une quelconque des revendications précédentes, **caractérisé en ce que** ledit objet à mesurer (7) est conçu sous forme d'un étrier support de garniture (7'), qui est apte à être relié de manière fixe audit premier desdits deux composants du frein à disque.

25. Ensemble de mesure (1) selon la revendication 24, **caractérisé en ce que** ledit étrier support de garniture (7') comprend ladite au moins une face frontale (23) ou ladite au moins une cible (3) à au moins une face frontale (23).

26. Ensemble de mesure (1) selon la revendication 25, **caractérisé en ce que** ladite au moins une cible (3) à au moins une face frontale (23) est fixée directement ou via un élément de maintien audit étrier support de garniture (7').

27. Ensemble de mesure (1) selon la revendication 25 ou 26, **caractérisé en ce que** ladite au moins une cible (3) à au moins une face frontale (23) est détachable directement ou via un élément de maintien audit étrier support de garniture (7').

28. Ensemble de mesure (1) selon la revendication 25, **caractérisé en ce que** ladite au moins une cible (3) à au moins une face frontale (23) est configurée de façon intégrale dans ledit étrier support de garniture (7').

29. Ensemble de mesure (1) selon une quelconque des revendications 24 à 28, **caractérisé en ce que** ledit étrier support de garniture (7') est apte à être monté moyennant un moyen de centrage audit premier composant.

30. Ensemble de mesure (1) selon une quelconque des revendications 24 à 29, **caractérisé en ce que** ledit étrier support de garniture (7') est guidé, de manière déplaçable, moyennant un moyen de guidage audit autre composant pour un guidage forcé selon la direction de ladite voie (S).

31. Détecteur de la force de serrage (2) à une boîte (21), dans lequel ledit capteur de force de serrage (2) pour l'interaction sans contact avec un objet à mesurer (7, 7') d'un ensemble de mesure (1) est conçu en tant que capteur à courant de Foucault pour la détection d'un déplacement le long d'une voie (S), comprenant une unité d'analyse (4) pour la conversion du déplacement détecté en une grandeur de mesure comme mesure d'une force de serrage, **caractérisé en ce que** l'ensemble de mesure (1) est configuré selon une quelconque des revendications précédentes.

32. Étrier support de garniture (7') d'un frein à disque comprenant un étrier de frein (10) chevauchant un disque de frein (11), une tête d'étrier et un dos d'étrier (13) y relié, dans lequel des garnitures de frein (15) sont logées dans ledit étrier de frein (10), qui sont aptes à être pressés des deux côtés contre ledit disque de frein (11) et qui sont radialement sécurisées moyennant ledit étrier support de garniture (7'), audit étrier support de garniture (7') comprenant au moins une face frontale métallique (23) pour l'interaction sans contact avec un capteur de force de serrage d'un ensemble de mesure (1), **caractérisé en ce que** ladite au moins une face frontale métallique (23) a une configuration bombée et **en ce que** ledit ensemble de mesure (1) est configuré selon une quelconque des revendications précédentes.

33. Frein à disque comprenant un étrier de frein (10) chevauchant un disque de frein (11), comprenant une tête d'étrier (14) et un dos d'étrier (13) y relié, dans lequel des garnitures de frein (15) sont logées dans ledit étrier de frein (10), qui sont aptes à être pressés des deux côtés contre ledit disque de frein (11) et qui sont radialement sécurisées moyennant ledit étrier support de garniture (7'), **caractérisé en ce que** le frein à disque comprend un ensemble de mesure selon une quelconque des revendications 1 à 30.
